# EUROPEAN PATENT APPLICATION

(11) **EP 3 772 456 A1**
(43) Date of publication of application: **10.02.2021**
(21) Application number: 20157735.0
(22) Date of filing: 17.02.2020
(51) Int. Cl.: B64C 3/18, B29D 99/00

(54) **REINFORCING MEMBER, ASSEMBLY, AND METHOD OF PRODUCING ASSEMBLY**

(30) Priority: 08.08.2019 JP 2019146025
(71) Applicant: Mitsubishi Heavy Industries, Ltd., Chiyoda-ku Tokyo 100-8332 (JP)
(72) Inventor: SHIMIZU, Takayuki, Tokyo, 100-8332 (JP); OKABE, Ryoji, Tokyo, 100-8332 (JP); OKUDA, Akihisa, Tokyo, 100-8332 (JP)
(74) Representative: Henkel & Partner mbB

(57) **Abstract**

A reinforcing member includes a flange portion extending along a surface of a target member to be reinforced, a web portion extending in a direction intersecting the surface, a joint connecting the flange portion and the web portion. In a filler space formed between the joint and the surface, a filler is placed. The filler is at least partially surrounded by a foam resin in the filler space.

## Description

### TECHNICAL FIELD

The present disclosure relates to a reinforcing member attachable to a target member to be reinforced, an assembly including the reinforcing member, and a method of producing the assembly.

### BACKGROUND

An aircraft wing (main wing, vertical tail, horizontal tail) includes a skin panel forming a wing surface, and various reinforcing members disposed inside the skin panel for reinforcing the skin panel. The aircraft wing includes, for example, a spar extending in the spanwise direction and a plurality of stiffeners extending in a direction intersecting the spanwise direction or the spar as the reinforcing member. For example, the stiffeners can be classified into several types according to the cross-sectional shape, including a T-beam stiffener having a T-shaped cross-sectional shape and an I-beam stiffener having an I-shaped cross-sectional shape, which are typically known.

The stiffener includes a stiffener body and a filler. As disclosed in Patent Document 1, for example, the stiffener body has a flange extending along the inner side of the skin panel, a web extending in a direction intersecting the flange, and a joint connecting the flange and the web, in a cross-sectional view from the spanwise direction. The joint is curved from the flange toward the web. Thus, a filler space is formed between the inner surface of the skin panel and the joint. The filler space is filled with a filler.

### Citation List

### Patent Literature

Patent Document 1: JP6360672B

### SUMMARY

In recent years, wings made of fiber reinforced plastic (FRP) have been increasing. The fiber reinforced plastic has light weight and high corrosion resistance compared to conventionally used materials such as aluminum alloy. This can improve the fuel efficiency and durability of an aircraft. To obtain the fiber reinforced plastic, fiber materials such as carbon fiber or glass fiber are stacked in one or multiple directions, and the fiber materials are impregnated with a matrix including a thermoplastic resin or a thermosetting resin. Then, the matrix is heated, cooled and cured to obtain a desired member. There is also known a method of obtaining a desired member by stacking prepreg materials in a semi-cured state.

When the stiffener body and the filler are made of fiber reinforced plastic, generally, the fiber direction of the stiffener body often differs from the fiber direction of the filler. More specifically, while the stiffener body is made of a prepreg material containing fibers oriented in multiple directions, the filler is made of a prepreg material containing fibers oriented in only one direction. When the fiber directions of the stiffener body and the filler differ from each other, there is a difference in linear expansion coefficient between the stiffener body and the filler in a specific direction. This may cause internal stress between the skin panel and the filler at the time of curing of the skin panel to be reinforced, which may cause a crack. The formation of a crack makes it difficult for the wing to meet quality standard, thus reducing the yield of assemblies of wings in the manufacturing process.

The present disclosure was made in view of the above problems, and an object thereof is to provide a reinforcing member, an assembly, and a method of producing an assembly that can prevent the occurrence of crack when members having different fiber directions are bonded, with high quality.

To achieve the above object, a reinforcing member according to the present disclosure is provided. The reinforcing member is attachable to a surface of a target member extending in at least one direction, and comprises, in a cross-sectional view perpendicular to the at least one direction: a flange portion extending along the surface; a web portion formed on the surface and extending in a direction intersecting an extension direction of the flange portion; a joint connecting the flange portion and the web portion; and a filler placed in a filler space formed between the joint and the surface. The filler is at least partially surrounded by a foam resin in the filler space.

To solve the above problem, an assembly according to an aspect of the present disclosure comprises the target member; and the above-described reinforcing member attached to the surface of the target member.

To accomplish the above object, a method of producing an assembly according to the present disclosure is provided. The assembly includes a target member extending in at least one direction, and a reinforcing member attached to a surface of the target member and including, in a cross-sectional view perpendicular to the at least one direction, a flange portion extending along the surface, a web portion formed on the surface and extending in a direction intersecting an extension direction of the flange portion, a joint connecting the flange portion and the web portion, and a filler placed in a filler space formed between the joint and the surface. The method comprises: a foam resin application step of applying a foam resin so as to at least partially surround the filler placed in the filler space; and a heating step of heating the filler together with the reinforcing member and the target member.

With the reinforcing member, the assembly, and the assembly production method according to the present disclosure, it is possible to prevent the occurrence of crack when members having different fiber directions are bonded.

### BRIEF DESCRIPTION OF DRAWINGS

FIG. 1 is an overall configuration diagram of an aircraft according to an embodiment of the present disclosure.
FIG. 2 is a partial cross-sectional view of the main wing of FIG. 1, viewed from the spanwise direction of the main wing.
FIG. 3 is an enlarged cross-sectional view of the stiffener of FIG. 2.
FIG. 4 is an enlarged cross-sectional view of the vicinity of the filler space of FIG. 3, viewed from the spanwise direction.
FIG. 5A is simulation result showing the internal stress distribution in the filler space not provided with a foam resin.
FIG. 5B is simulation result showing the internal stress distribution in the filler space provided with a foam resin.
FIG. 6 is a modified example of FIG. 4.
FIG. 7 is a flowchart showing steps of the method of producing the assembly according to an embodiment of the present disclosure.
FIG. 8 is a schematic diagram of the production method of FIG. 7.
FIG. 9 is a modified example of FIG. 7.
FIG. 10 is a schematic diagram of the production method of FIG. 9.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

### (Aircraft)

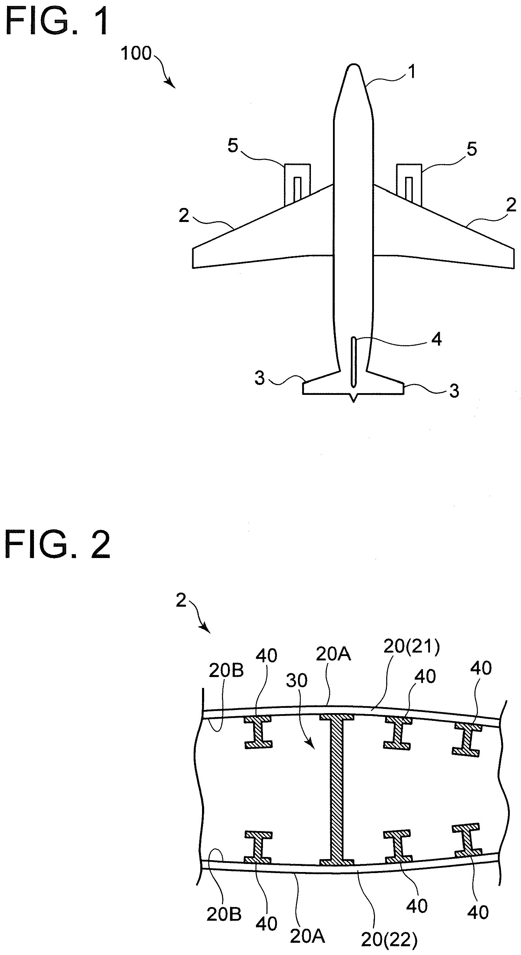

Hereinafter, a main wing of an aircraft will be described as an example of the assembly including the reinforcing member according to an embodiment of the present disclosure. FIG. 1 is an overall configuration diagram of an aircraft 100 according to an embodiment of the present disclosure. The aircraft 100 includes a fuselage 1, main wings 2 (assemblies), horizontal tails 3, a vertical tail 4, and turbofan engines 5.

The fuselage 1 has a tubular shape extending along the traveling direction of the aircraft 100 and can hold passengers and cargo therein. The main wings 2 generate lift as the aircraft 100 glides or flies. The main wings 2 extend in a substantially horizontal direction from a substantially central portion of the fuselage 1, one on each of the left and right sides of the fuselage 1. The horizontal tails 3 are provided to change the attitude (pitch angle) of the aircraft 100 during flight. The horizontal tails 3 extend in a substantially horizontal direction from a rear end portion of the fuselage 1, one on each of the left and right sides of the fuselage 1. The vertical tail 4 is provided to change the attitude (yaw angle) of the aircraft 100 during flight. The vertical tail 4 extends upward from a rear end portion of the aircraft 100. The turbofan engines 5 generate thrust rearward by burning a mixture of fuel and air. The turbofan engines 5 are mounted so that one is suspended from the lower surface of each main wing 2.

As a device for generating thrust, a device (e.g., turboprop engine) other than the turbofan engine 5 may be used. The number of the turbofan engines 5 is not limited to two, but may be three or more. In the following description, as appropriate, the direction connecting both ends of the main wing 2, that is, the direction in which the main wing 2 extends is referred to as the spanwise direction, and the direction in which the fuselage 1 extends is referred to as the traveling direction.

FIG. 2 is a partial cross-sectional view of the main wing 2 of FIG. 1, viewed from the spanwise direction. The main wing 2 is configured by attaching spars 30 and stiffeners 40, which are reinforcing members, to a skin panel 20, which is a target member to be reinforced.

The skin panel 20 extends in the spanwise direction and in a direction perpendicular to the spanwise direction. The skin panel 20 extends longer in the spanwise direction than in the direction perpendicular to the spanwise direction. Accordingly, the skin panel 20 has a thin plate shape, one side of which forms a wing surface 20A of the main wing 2 and the other side of which forms an inner surface 20B of the main wing 2 (surface of target member).

The skin panel 20 is gently curved so as to correspond to the airfoil cross-section of the main wing 2. In the following description, as appropriate, the skin panel 20 forming the upper side of the main wing 2 is referred to as an upper skin panel 21, and the skin panel 20 forming the lower side of the main wing 2 is referred to as a lower skin panel 22. The upper skin panel 21 and the lower skin panel 22 are integrally formed of fiber reinforced plastic.

The stiffener 40 is provided to reinforce the skin panel 20 and suppress distortion. Multiple stiffeners 40 are arranged on the inner surface 20B of the skin panel 20 at intervals along the traveling direction. Each stiffener 40 is a column-like member extending in a substantially spanwise direction, and has a substantially I-shaped cross-sectional shape when viewed from the spanwise direction.

The stiffener 40 which is an aspect of the reinforcing member according to the present disclosure will now be described in detail. Although the stiffener 40 will be mentioned as the reinforcing member in the following description, the same shall apply to the spar 30 unless otherwise noted.

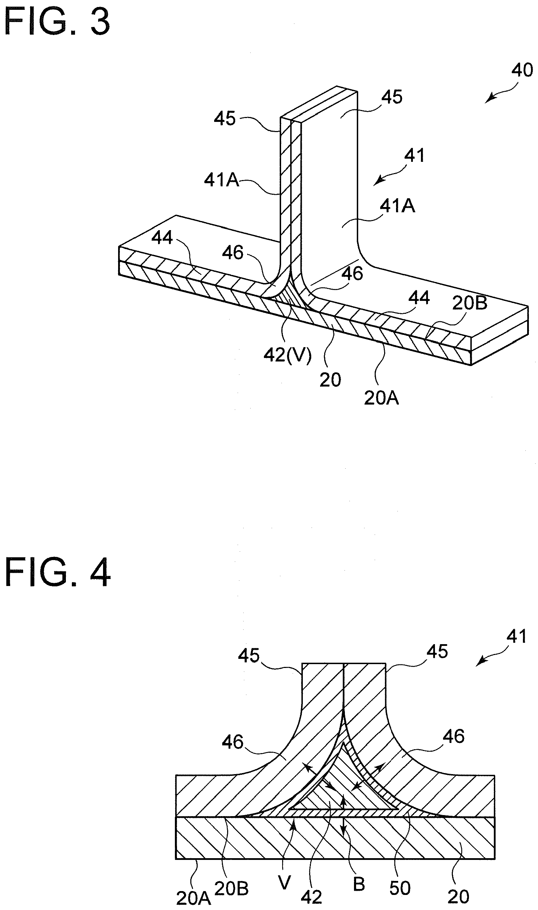

FIG. 3 is an enlarged cross-sectional view of the stiffener 40 of FIG. 2. The stiffener 40 includes a stiffener body 41 and a filler 42. The stiffener body 41 is formed by bonding a pair of stiffener half bodies 41A having a substantially C-shape when viewed from the spanwise direction. Each stiffener half body 41A includes flange portions 44, a web portion 45 extending in a substantially vertical direction, and joints 46 connecting the flange portions 44 with the web portion 45.

Each flange portion 44 extends in the spanwise direction along the inner surface 20B of the skin panel 20. Also, each flange portion 44 extends along the inner surface 20B of the skin panel 20 in a cross-sectional view perpendicular to the spanwise direction. Further, the pair of flange portions 44 are arranged at an interval from each other on the inner surface 20B of the skin panel 20 in a cross-sectional view perpendicular to the spanwise direction.

The web portion 45 extends in a direction (substantially vertical direction) intersecting the extension direction of the flange portions 44 (or the inner surface 20B of the skin panel 20) in a cross-sectional view perpendicular to the spanwise direction. The joints 46 connect the pair of flange portions 44 with the web portion 45 in a cross-sectional view perpendicular to the spanwise direction. The joint 46 is curved from one side to the other in the traveling direction so as to be away from the inner surface 20B of the skin panel 20. Specifically, the joint 46 has a substantially arc shape when viewed from the spanwise direction. By bonding the web portions 45 of the stiffener half bodies 41A thus formed in the traveling direction, the stiffener body 41 is formed. At this time, a filler space V is formed between the inner surface 20B of the skin panel and the joints 46.

FIG. 4 is an enlarged cross-sectional view of the vicinity of the filler space V of FIG. 3, viewed from the spanwise direction. The filler space V is a space for receiving the filler 42 and a foam resin 50 and has a substantially triangular shape. The foam resin 50 is a foam-like or porous material in which gas is dispersed in a synthetic resin, and has a low stiffness compared to the surrounding member (e.g., skin panel 20, stiffener body 41, and filler 42). The foam resin 50 fills a portion of the filler space V not filled with the filler 42 by volume expansion when the skin panel 20, the stiffener body 41, and the filler 42 are cured and bonded with each other as described later. The foam resin 50 may be an epoxy foam resin, for example.

The stiffener body 41 and the filler 42 each extend longer in the spanwise direction than in the direction perpendicular to the spanwise direction. The stiffener body 41 and the filler 42 are made of fiber reinforced plastic. The fiber direction of the stiffener body 41 differs from the fiber direction of the filler 42. More specifically, the stiffener body 41 and the skin panel 20 are made of fiber reinforced plastic containing fibers oriented in multiple directions while the filler 42 is made of fiber reinforced plastic containing fibers oriented in only the extension direction of the stiffener 40 (spanwise direction). Accordingly, there is a difference in linear expansion coefficient in a specific direction between the stiffener body 41 and the filler 42.

The reinforcing member having such a configuration is produced by the curing process involving heating and cooling with the skin panel 20, the stiffener body 41, and the filler 42 being assembled, as described later. Since the curing process involves heating and cooling, internal stress may be generated between the filler 42 and the surrounding having different linear expansion coefficients as shown by the arrow B in FIG. 4.

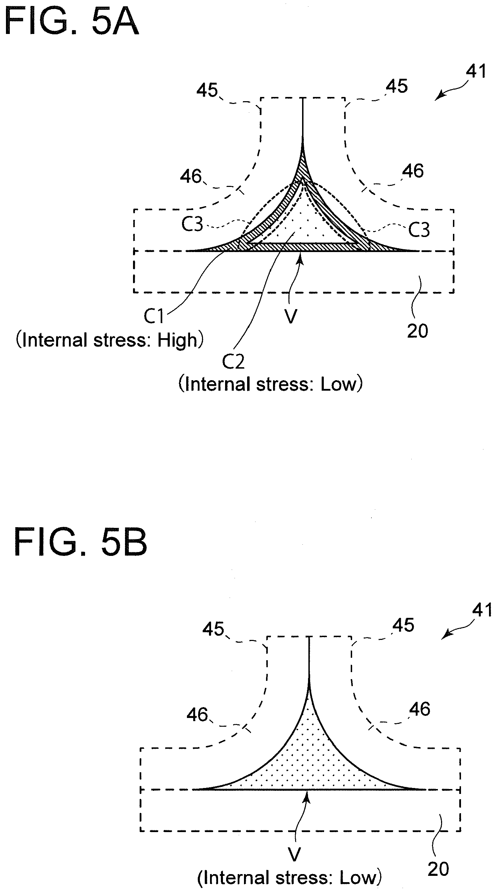

In the present embodiment, since the foam resin 50 is provided in the filler space V in addition to the filler 42, it is possible to effectively reduce such internal stress. FIG. 5A is simulation result showing the internal stress distribution in the filler space V not provided with the foam resin 50 (i.e., the filler space V is filled only with the filler 42). FIG. 5B is simulation result showing the internal stress distribution in the filler space V provided with the foam resin 50.

As shown in FIG. 5A, in the case where the foam resin 50 is not provided, the filler space V tends to have higher internal stress in the vicinity of boundary C1 between the joint 46 and the skin panel 20 (i.e., in the vicinity of the rim of the filler space V), than inside C2. More specifically, it was demonstrated that the filler space V tends to have internal stress particularly in a portion between the joints 46 and the filler 42 placed in the filler space V (see region C3 surrounded by the dotted line in FIG. 5A) in the vicinity of boundary C1 between the joint 46 and the skin panel 20. In contract, as shown in FIG. 5B, in the case where the foam resin 50 is provided, it was demonstrated that internal stress is reduced and equalized over the entire filler space V.

In the curing process performed for molding, the simulation of heating to about 180 degrees and then cooling to room temperature of about 20 degrees showed that, when the foam resin 50 is not provided, internal stress of 36 MPa or more is generated, and a defect such as a crack may occur. In contrast, when the foam resin 50 having a stiffness of about one tenth of the filler 42 is provided, internal stress is reduced to about 3.5 MPa, i.e., about one tenth.

Such a foam resin 50 may be disposed over the entire circumference of the filler 42 as shown in FIG. 4. In this case, it is possible to reduce internal stress over a wide range surrounding the filler 42. Although the size of the region occupied by the foam resin 50 depends on the size of the filler space V, the thickness of this region may be about 0.3 mm to 2.0 mm in a cross-section viewed from the spanwise direction.

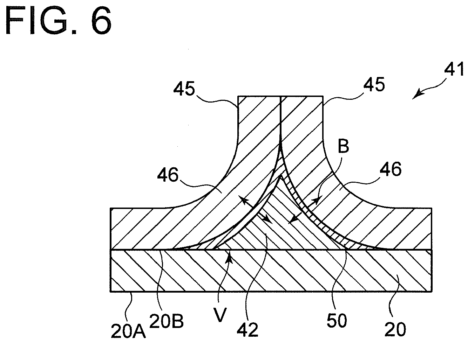

Alternatively, the foam resin 50 in the filler space V may partially surround the filler 42 as shown in FIG. 6. In FIG. 6, particularly, the foam resin 50 is partially applied to a portion between the filler 42 and the joint 46 where internal stress is likely to occur. In this case, since the foam resin 50 is limitedly provided in a portion where internal stress is likely to occur, it is possible to more efficiently reduce internal stress.

For example, when the skin panel 20, the stiffener body 41, and the filler 42 are made of a material containing a thermoplastic resin, the foam resin 50 may have a foam formation temperature lower than the plastic temperature of the thermoplastic resin. In this case, as described later, as the skin panel 20, the stiffener body 41, and the filler 42 are heated for curing, the foam resin 50 foams before plastic forming starts. Thus, it is possible to effectively reduce internal stress caused during the curing process.

Alternatively, when the skin panel 20, the stiffener body 41, and the filler 42 are made of a material containing a thermosetting resin, the foam resin 50 may have a foam formation temperature lower than the curing temperature of the thermosetting resin. In this case, as described later, as the skin panel 20, the stiffener body 41, and the filler 42 are heated for curing, the foam resin 50 foams before curing starts. Thus, it is possible to effectively reduce internal stress caused during the curing process.

### (Assembly production method)

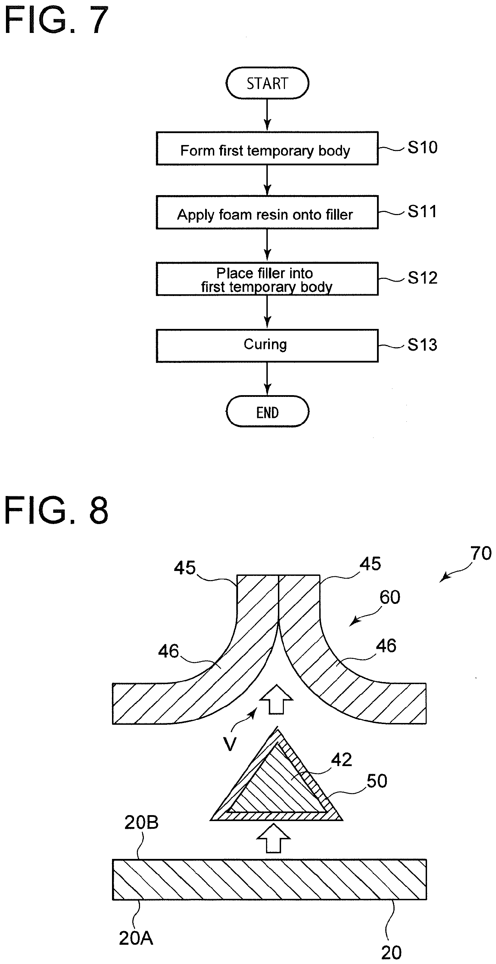

Next, the method of producing the assembly will be described. FIG. 7 is a flowchart showing steps of the method of producing the assembly according to an embodiment of the present disclosure. FIG. 8 is a schematic diagram of the production method of FIG. 7.

In the production method according to an embodiment, as shown in FIG. 8, a pair of stiffener half bodies 41A is prepared and temporarily bonded to form a first temporary body 60 (step S10). In the first temporary body 60, a filler space V is formed in the vicinity of the joints 46 as a result of bonding the web portions 45. At this time, the filler space V is exposed to the outside.

Then, a filler 42 to be placed in the filler space V is prepared, and a foam resin 50 is applied onto the surface of the filler 42 (step S11). The application of the foam resin 50 may be performed by applying a liquid material onto the surface of the filler 42. The applied foam resin 50 is preferably one that does not deteriorate in the later-described curing process (for example, when the components are made of a thermosetting resin, the foam resin does not deteriorate at the curing temperature (e.g., 180 degrees) of the thermosetting resin) and foams prior to heat curing during heating.

Although FIG. 7 shows the case where step S10 is performed prior to step S11, step S11 may be performed prior to step S10, or steps S10 and S11 may be simultaneously performed.

Then, the filler 42 on which the foam resin 50 is applied in step S11 is placed into the filler space V of the first temporary body 60 prepared in step S10, and the inner surface 20B of the skin panel 20 is attached thereto (step S12). Thus, a second temporary body 70 with the filler 42 placed in the filler space V is completed.

Then, the second temporary body 70 is subjected to the curing process (step S13). When the second temporary body 70 is made of a thermoplastic resin or a thermosetting resin, the curing process involves heat treatment using, for example, an autoclave or an oven, followed by cooling to room temperature. Thus, the skin panel 20, the pair of stiffener half bodies 41A, and the filler 42 of the second temporary body 70 are bonded.

At this time, the foam resin 50 applied on the surface of the filler 42 foams between the filler 42 and the joint 46 in the course of curing process. Thus, internal stress generated during the curing process is effectively reduced by the foam resin 50.

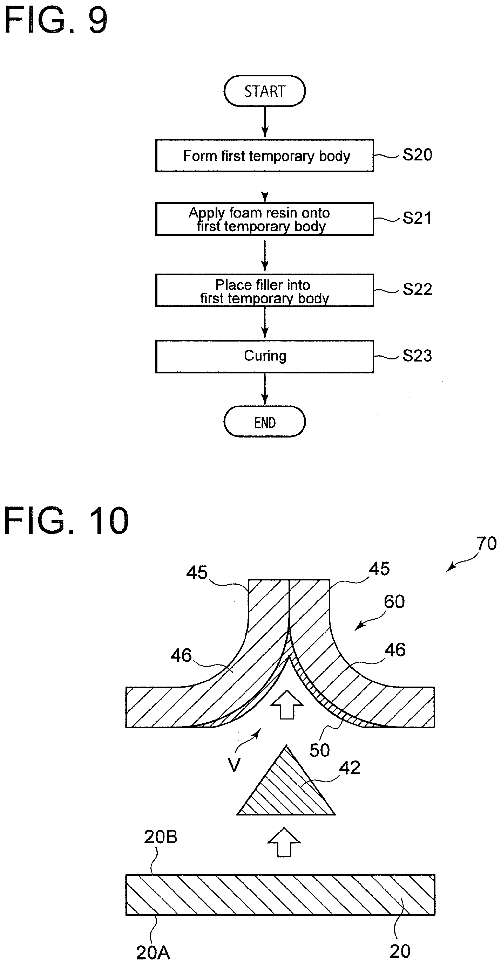

FIG. 9 is a flowchart of a modified example of FIG. 7. FIG. 10 is a schematic diagram of the production method of FIG. 9.

In this modified example, after the first temporary body 60 is formed as with step S10 (step S20), as shown in FIG. 10, the foam resin 50 is applied onto the inner surface of the filler space V of the first temporary body 60 (step S21). Then, the filler 42 separately prepared is placed into the filler space V, and the skin panel 20 is assembled to form the second temporary body 70 (step S22). Thereafter, as with step S14, the second temporary body is subjected to the curing process and completed (step S23). The assembly thus can also be obtained by applying the foam resin 50 onto the inner surface of the filler space V.

In addition, the components in the above-described embodiments may be appropriately replaced with known components without departing from the spirit of the present disclosure, or the above-described embodiments may be appropriately combined.

The contents described in the above embodiments would be understood as follows, for instance.
(1) To solve the above problems, a reinforcing member according to an aspect of the present disclosure is provided. The reinforcing member (e.g., stiffener 40 in the above embodiments) is attachable to a surface of a target member (e.g., skin panel 20 in the above embodiments) extending in at least one direction, and comprises, in a cross-sectional view perpendicular to the at least one direction (e.g., spanwise direction in the above embodiments): a flange portion (e.g., flange portion 44 in the above embodiments) extending along the surface (e.g., surface 20B of skin panel 20 in the above embodiments); a web portion (e.g., web portion 45 in the above embodiments) formed on the surface and extending in a direction intersecting an extension direction of the flange portion; a joint (e.g., joint 46 in the above embodiments) connecting the flange portion and the web portion; and a filler (e.g., filler 42 in the above embodiments) placed in a filler space formed between the joint and the surface. The filler is at least partially surrounded by a foam resin (e.g., foam resin 50 in the above embodiments) in the filler space (e.g., filler space V in the above embodiments).
   According to the above aspect (1), the filler and the foam resin are placed in the filler space formed between the joint and the target member. The foam resin has low stiffness compared to the surrounding, and can effectively reduce internal stress generated in the filler space when the curing process is performed.
(2) In the reinforcing member according to another aspect, in the above (1), the foam resin (e.g., foam resin 50 in the above embodiments) is disposed between the joint (e.g., joint 46 in the above embodiments) and the filler (e.g., filler 42 in the above embodiments).
   According to the above aspect (2), the foam resin is disposed between the joint and the filler. Thus, it is possible to efficiently reduce internal stress in a portion between the joint and the filler where internal stress is likely to occur during the curing process.
(3) In the reinforcing member according to another aspect, in the above (1), in a cross-sectional view perpendicular to the at least one direction (e.g., spanwise direction in the above embodiments), an entire circumference of the filler (e.g., filler 42 in the above embodiments) is surrounded by the foam resin (e.g., foam resin 50 in the above embodiments) in the filler space (e.g., filler space V in the above embodiments).
   According to the above aspect (3), since the foam resin is formed over the entire circumference of the filler, it is possible to effectively reduce internal stress over the entire boundary surface of the filler space.
(4) In the reinforcing member according to another aspect, in any of the above (1) to (3), the flange portion (e.g., flange portion 44 in the above embodiments), the web portion (e.g., web portion 45 in the above embodiments), the joint (e.g., joint 46 in the above embodiments), and the filler (e.g., filler 42 in the above embodiments) include a thermoplastic resin, and the foam resin (e.g., foam resin 50 in the above embodiments) has a foam formation temperature lower than a plastic temperature of the thermoplastic resin.
   According to the above aspect (4), when the flange portion, the web portion, the joint, and the filler are heated for plastic deformation, the foam resin foams prior to the plastic deformation. Thus, it is possible to effectively reduce internal stress generated during curing.
(5) In another aspect, in any of the above (1) to (3), the flange portion (e.g., flange portion 44 in the above embodiments), the web portion (e.g., web portion 45 in the above embodiments), the joint (e.g., joint 46 in the above embodiments), and the filler (e.g., filler 42 in the above embodiments) include a thermosetting resin, and the foam resin (e.g., foam resin 50 in the above embodiments) has a foam formation temperature lower than a curing temperature of the thermosetting resin.
   According to the above aspect (5), when the flange portion, the web portion, the joint, and the filler are heated for curing, the foam resin foams prior to the curing. Thus, it is possible to effectively reduce internal stress generated during curing.
(6) In another aspect, in any of the above (1) to (5), the foam resin (e.g., foam resin 50 in the above embodiments) has a thickness of 0.3 mm to 2.0 mm.
   According to the above aspect (6), since the thickness of the foam resin is limited to this range, it is possible to reduce internal stress by the foam resin while ensuring the stiffness of the reinforcing member by the filler placed in the filler space.
(7) To solve the above problems, an assembly according to an aspect of the present disclosure comprises: the target member (e.g., skin panel 20 in the above embodiments); and the reinforcing member (e.g., stiffener 40 in the above embodiments) according to any one of the above (1) to (6) attached to the surface of the target member.
   According to the above aspect (7), since the reinforcing member is attached with internal stress reduced as described above, it is possible to obtain the assembly excellent in reliability with reduced defects such as a crack.
(8) To solve the above problems, a method of producing an assembly according to the present disclosure is provided. The assembly includes a target member (e.g., skin panel 20 in the above embodiments) extending in at least one direction, and a reinforcing member (e.g., stiffener 40 in the above embodiments) attached to a surface of the target member and including, in a cross-sectional view perpendicular to the at least one direction (e.g., spanwise direction in the above embodiments), a flange portion (e.g., flange portion 44 in the above embodiments) extending along the surface, a web portion (e.g., web portion 45 in the above embodiments) formed on the surface and extending in a direction intersecting an extension direction of the flange portion, a joint (e.g., joint 46 in the above embodiments) connecting the flange portion and the web portion, and a filler (e.g., filler 42 in the above embodiments) placed in a filler space (e.g., filler space V in the above embodiments) formed between the joint and the surface. The method comprises: a foam resin application step of applying a foam resin (e.g., foam resin 50 in the above embodiments) so as to at least partially surround the filler (e.g., filler 42 in the above embodiments) placed in the filler space (e.g., filler space V in the above embodiments); and a heating step of heating the filler (e.g., filler 42 in the above embodiments) together with the reinforcing member (e.g., stiffener 40 in the above embodiments) and the target member (e.g., skin panel 20 in the above embodiments).
   According to the above aspect (8), the foam resin is applied onto the filler space in addition to the filler. The foam resin has low stiffness compared to the surrounding, and can effectively reduce internal stress generated in the filler space when the curing process is performed.
(9) In another aspect, in the above (8), the foam resin application step includes applying the foam resin (e.g., foam resin 50 in the above embodiments) on a surface of the filler (e.g., filler 42 in the above embodiments) prior to placing the filler into the filler space (e.g., filler space V in the above embodiments), and then placing the filler with the applied foam resin into the filler space.
   According to the above aspect (9), the foam resin is previously applied onto the surface of the filler, and then the filler with the applied foam resin is placed into the filler space. Thus, it is possible to apply the foam resin so as to at least partially surround the filler placed in the filler space.
(10) In an aspect, in the above (8), the foam resin application step includes applying the foam resin on an inner surface of the filler space prior to placing the filler, and then placing the filler into the filler space with the applied foam resin.

According to the above aspect (10), the foam resin is applied onto the inner surface of the filler space before the filler is placed therein, and then the filler is placed. Thus, it is possible to apply the foam resin so as to at least partially surround the filler placed in the filler space.

## Claims

1. A reinforcing member attachable to a surface of a target member extending in at least one direction, the reinforcing member comprising, in a cross-sectional view perpendicular to the at least one direction:
a flange portion extending along the surface;
a web portion formed on the surface and extending in a direction intersecting an extension direction of the flange portion;
a joint connecting the flange portion and the web portion; and
a filler placed in a filler space formed between the joint and the surface,
wherein the filler is at least partially surrounded by a foam resin in the filler space.

2. The reinforcing member according to claim 1,
wherein the foam resin is disposed between the joint and the filler.

3. The reinforcing member according to claim 1,
wherein, in a cross-sectional view perpendicular to the at least one direction, an entire circumference of the filler is surrounded by the foam resin in the filler space.

4. The reinforcing member according to any one of claims 1 to 3,
wherein the flange portion, the web portion, the joint, and the filler include a thermoplastic resin, and
wherein the foam resin has a foam formation temperature lower than a plastic temperature of the thermoplastic resin.

5. The reinforcing member according to any one of claims 1 to 3,
wherein the flange portion, the web portion, the joint, and the filler include a thermosetting resin, and
wherein the foam resin has a foam formation temperature lower than a curing temperature of the thermosetting resin.

6. The reinforcing member according to any one of claims 1 to 5,
wherein the foam resin has a thickness of 0.3 mm to 2.0 mm.

7. An assembly comprising:
the target member; and
the reinforcing member according to any one of claims 1 to 6 attached to the surface of the target member.

8. A method of producing an assembly including a target member extending in at least one direction and a reinforcing member attached to a surface of the target member,
the reinforcing member including, in a cross-sectional view perpendicular to the at least one direction,
a flange portion extending along the surface,
a web portion formed on the surface and extending in a direction intersecting an extension direction of the flange portion,
a joint connecting the flange portion and the web portion, and
a filler placed in a filler space formed between the joint and the surface,
the method comprising:
a foam resin application step of applying a foam resin so as to at least partially surround the filler placed in the filler space; and
a heating step of heating the filler together with the reinforcing member and the target member.

9. The method according to claim 8,
wherein the foam resin application step includes applying the foam resin on a surface of the filler prior to placing the filler into the filler space, and then placing the filler with the applied foam resin into the filler space.

10. The method according to claim 8,
wherein the foam resin application step includes applying the foam resin on an inner surface of the filler space prior to placing the filler, and then placing the filler into the filler space with the applied foam resin.
